# EUROPÄISCHE PATENTSCHRIFT

(11) **EP 3 477 099 B1**
(45) Veröffentlichungstag und Bekanntmachung des Hinweises auf die Patenterteilung: **04.12.2024**
(21) Anmeldenummer: 18202184.0
(22) Anmeldetag: 24.10.2018
(51) Int. Cl.: F03D 13/20, E04H 12/08, E04H 12/12

(54) **TURM MIT KONISCHEN STAHLADAPTERELEMENTEN**
TOWER WITH CONICAL STEEL ADAPTER ELEMENTS
TOUR POURVUE D'ÉLÉMENTS ADAPTATEURS EN ACIER CONIQUES

(30) Priorität: 26.10.2017 DE 102017009984
(43) Veröffentlichungstag der Anmeldung: 01.05.2019
(73) Patentinhaber: Siemens Gamesa Renewable Energy Service GmbH, 20097 Hamburg (DE)
(72) Erfinder: FROST, Bernd, 25551 Winseldorf (DE)
(74) Vertreter: Schlotter, Alexander Carolus Paul

(56) Entgegenhaltungen:
- EP-A2- 2 672 115
- DE-A1- 102010 039 796
- DE-A1- 102012 001 109
- DE-A1- 102016 203 526

## Beschreibung

Die Erfindung betrifft einen Turm, insbesondere für eine Windenergieanlage, umfassend einen unteren Turmabschnitt und einen oberen Turmabschnitt, wobei der untere Turmabschnitt aus Betonsegmenten oder Ortbeton und der obere Turmabschnitt aus wenigstens einem Stahlsegment ausgebildet ist, wobei ein Adapterabschnitt zwischen dem unteren Turmabschnitt und dem oberen Turmabschnitt angeordnet ist. Die Erfindung betrifft außerdem ein Verfahren zum Errichten eines Turms, insbesondere für eine Windenergieanlage.

Bei Windenergieanlagen ist es häufig sinnvoll, Türme mit Höhen jenseits von 150 m zu errichten, da auf diese Weise der Energieertrag erhöht werden kann. Auch beim Bau von Funktürmen kann es sinnvoll sein, solche Turmhöhen vorzusehen. Um Türme mit solchen Höhen zu errichten, wird häufig ein unterer Abschnitt aus Betonsegmenten und ein oberer Abschnitt aus Stahlsegmenten gebaut. Solche Türme werden Hybridtürme genannt und können höher gebaut werden als reine Stahlsegmenttürme oder reine Betontürme, da die Höhe von Stahlsegmenttürmen oder Betontürmen aufgrund von Transport-, Belastungs- und Fertigungsproblemen begrenzt ist.

Das Fertigen von Turmabschnitten aus Stahl ist häufig wirtschaftlicher als die Verwendung von Beton. Daher ist es bei Hybridtürmen sinnvoll, einen oberen Turmabschnitt aus Stahl möglichst hoch und einen unteren Turmabschnitt aus Beton möglichst klein zu halten. Eine kostengünstige Möglichkeit, den Turmabschnitt aus Stahl zu fertigen, ist die Verwendung von zylinderförmigen oder konischen Stahlsegmenten. Die Abmessungen dieser Stahlsegmente sind jedoch durch den Transport zur Baustelle begrenzt. Die Länge eines solchen Stahlsegments entspricht der maximalen Transportlänge der verwendeten Fahrzeuge und liegt bei etwa 30 m. Der maximale Durchmesser der Stahlsegmente wird durch die maximale Transporthöhe vorgegeben, die durch Brücken, Tunnel oder ähnliches begrenzt ist und bei etwa 4,3 m bis 4,5 m liegt. Eine Alternative ist die Fertigung der Stahlsegmente auf der Baustelle, wobei jedoch entsprechende Fertigungsmöglichkeiten zur Verfügung stehen müssen, was mit hohen Kosten verbunden ist.

Der untere Turmabschnitt wird entweder auf der Baustelle mittels sogenanntem Ortbeton hergestellt oder aus vorgefertigten Betonsegmenten aufgebaut, wobei die Verwendung von vorgefertigten Betonsegmenten eine kürzere Bauzeit und damit reduzierte Kosten ermöglicht.

Zur Verbindung des oberen Turmabschnitts aus Stahl mit dem unteren Turmabschnitt aus Beton werden häufig Adapterelemente aus Beton eingesetzt. Durch den darüber liegenden oberen Turmabschnitt treten auf der Auflagefläche des Betonadapterelements hohe Lasten auf. Um die Stabilität und Festigkeit des Turms sicherzustellen, muss daher die maximale Höhe des oberen Turmabschnitts aus Stahl begrenzt und stattdessen ein höherer unterer Turmabschnitt aus Beton errichtet werden. Mit einer zunehmenden Höhe des unteren Turmabschnitts steigen jedoch die Kosten eines solchen Turms an.

Ein Hybridturm, bei dem ein oberer Turmabschnitt aus im Wesentlichen zylindrischen oder konischen Stahlsegmenten und ein höherer unterer Turmabschnitt aus Betonsegmenten gefertigt ist, ist beispielsweise in WO 2012/163906 A1 offenbart. Das Adapterelement ist in diesem Fall ein zylindrisches Übergangsstück, das aus einem Verbundmaterial aus Stahl und Beton gefertigt ist.

Die DE 10 2016 203 526 A1 betrifft einen Turm mit einer Adaptervorrichtung, wobei der Turm überwiegend aus Beton und die Adaptervorrichtung aus einem Adapterring aus überwiegend Stahl ausgebildet ist, wobei der Adapterring an einem oberen Ende einen oberen Flansch und an einem unteren Ende einen unteren Flansch aufweist, der über einen rohrförmigen Ringabschnitt des Adapterrings mit dem oberen Flansch verbunden ist, wobei der obere Flansch als ein sich in Richtung einer Innenseite des Adapterrings radial erstreckender Ringflansch und der untere Flansch als ein sich in Richtung einer Außenseite des Adapterrings radial erstreckender Ringflansch ausgebildet ist.

Die EP 2 672 115 A2 betrifft einen Turm mit einer bodenseitig abgestützten Betonsäule, einer Oberkonstruktion und einem zwischen liegenden Adaptersegment mit ringförmigem Stahlmantel, wobei dieser hybride Turmaufbau einen Stahlmantel aufweist, der einen am Außenumfang im Wesentlichen gleichebenig mit der unteren Betonsäule verlaufenden Anschlussbereich definiert und an einer Innenseite des Stahlmantels jeweilige Ankerelemente vorgesehen sind, die als jeweilige zumindest den Stahlmantel erfassende Halteeinheiten ausgebildet sind, mit denen im Verbindungsbereich von Betonsäule und Oberkonstruktion aufnehmbare Belastungen als jeweils aufteilbare Längs-, Quer- und Scherkomponenten gezielt vom Adaptersegment in den Betonaufbau ableitbar sind.

Die Aufgabe der Erfindung besteht darin, einen Turm, insbesondere für eine Windenergieanlage, sowie ein Verfahren zum Errichten eines solchen Turms anzugeben, wobei die Wirtschaftlichkeit des Turms verbessert werden soll.

Diese Aufgabe wird gelöst durch einen Turm, insbesondere für eine Windenergieanlage, umfassend einen unteren Turmabschnitt und einen oberen Turmabschnitt, wobei der untere Turmabschnitt aus Betonsegmenten oder Ortbeton und der obere Turmabschnitt aus wenigstens einem Stahlsegment ausgebildet ist, wobei ein Adapterabschnitt zwischen dem unteren Turmabschnitt und dem oberen Turmabschnitt angeordnet ist, der dadurch weitergebildet ist, dass der Adapterabschnitt ein Betonadapterelement und wenigstens ein über dem Betonadapterelement angeordnetes Stahladapterelement umfasst, wobei das Stahladapterelement konisch geformt ist und sich in Richtung des oberen Turmabschnitts verjüngt.

Der Adapterabschnitt des Turms umfasst somit ein Betonadapterelement und wenigstens ein darüber angeordnetes konisches Stahladapterelement. Durch die Verwendung der konischen Stahladapterelemente ist es möglich, den Durchmesser des Betonadapterelements zu erhöhen, ohne den Durchmesser der darüber liegenden Stahlsegmente vergrößern zu müssen. Durch die Erhöhung des Durchmessers des Betonadapterelements steigt dessen Bauteilwiderstand, wobei die Erhöhung in etwa quadratisch zum Durchmesser des Betonadapterelements ist. Gleichzeitig können für den oberen Turmabschnitt Stahlsegmente verwendet werden, die wirtschaftlich herzustellen und zu transportieren sind, da ihr Durchmesser klein gehalten werden kann.

Erfindungsgemäß können entweder ein einzelnes Stahladapterelement oder mehrere übereinanderliegende Stahladapterelemente zum Einsatz kommen. Durch die Verwendung einer Mehrzahl von Stahladapterelementen werden zwar die Herstellungskosten für die Stahladapterelemente erhöht, der maximale Durchmesser des untersten Stahladapterelements und damit der Durchmesser des Betonadapterelements kann jedoch ebenfalls erhöht werden.

Vorzugsweise ist eine Höhe des oberen Turmabschnitts größer als, insbesondere wenigstens doppelt so groß wie, eine Höhe des unteren Turmabschnitts, wobei insbesondere eine Gesamthöhe des Turms wenigstens 150 m beträgt.

Durch die Verwendung der konischen Stahladapterelemente und der damit verbundenen Erhöhung des Bauteilwiderstands des Betonadapterelements kann der obere Turmabschnitt aus Stahl deutlich höher und der untere Turmabschnitt aus Beton deutlich niedriger gebaut werden als bei Türmen gemäß dem Stand der Technik. Dadurch können die Kosten zur Errichtung des Turms deutlich reduziert werden.

Dies ist insbesondere sinnvoll für Türme mit Höhen über 150 m, da das Problem der durch die Stahlsegmente auf dem Betonadapterelement auftretenden Lasten in besonderem Maße bei diesen Türmen auftritt. Es ist durch die Verwendung der erfindungsgemäßen Stahladapterelemente daher möglich, Turmhöhen zu realisieren, die nach dem Stand der Technik nur unter Verwendung hoher unterer Turmabschnitte aus Beton und damit verbundener hoher Baukosten errichtet werden können.

In einer vorteilhaften Ausgestaltung weisen die Stahladapterelemente jeweils eine Höhe von wenigstens 2,5 m, insbesondere von 3,5 m bis 4,5 m auf. Die Höhe der Stahladapterelemente wird abhängig von den Gegebenheiten des Transportwegs so gewählt, dass diese flach liegend transportiert werden können, also die Stahladapter-elemente auf der unteren Deckfläche liegen. Dadurch ist es möglich, den maximalen Durchmesser der Stahladapterelemente größer zu gestalten als den maximalen Durchmesser der Stahlsegmente. Eine Begrenzung ist nur durch die Transportbreite gegeben.

Die Stahladapterelemente weisen jeweils vorteilhafterweise ein Verhältnis von Höhe zu maximalem Durchmesser von 1 oder weniger auf, wobei insbesondere das Verhältnis zwischen 1 und 0,6 liegt. Durch dieses Verhältnis von Höhe zu maximalem Durchmesser wird ein guter Kompromiss zwischen Wirtschaftlichkeit und Belastbarkeit erreicht. Ein zu hohes Verhältnis macht die Verwendung weiterer Stahladapterelemente notwendig, um die erforderliche Zunahme des Durchmessers zu erreichen, wodurch erhöhte Kosten entstehen. Bei einem zu geringen Verhältnis können die Stahladapterelemente die auf ihnen auftretenden Lasten nicht mehr zuverlässig aufnehmen.

In einer bevorzugten Ausführungsform weist eine untere Abschlussfläche des oberen Turmabschnitts den gleichen Durchmesser auf wie eine obere Deckfläche eines darunter anliegenden Stahladapterelements und eine untere Deckfläche jedes Stahladapterelements weist den gleichen Durchmesser auf wie eine obere Deckfläche eines darunter anliegenden Stahladapterelements oder eine obere Deckfläche des darunter anliegenden Betonadapterelements. Dadurch wird erreicht, dass das oberste Stahladapterelement dem darüber anliegenden Stahlsegment eine gute Auflagefläche zur Verfügung stellt. Dies gilt ebenso für die Auflageflächen übereinander aufliegender Stahladapterelemente und die Auflagefläche des Betonadapterelements. Zudem wird ein optisch sauberer Übergang zwischen den Adapterelementen und dem oberen Turmabschnitt erzielt.

Bei wenigstens einem Stahladapterelement ist ein Durchmesser der unteren Deckfläche bevorzugt um wenigstens 0,4 m, insbesondere bis 0,6 m, größer als ein Durchmesser der oberen Deckfläche. Weiterhin vorzugsweise weist die untere Abschlussfläche des oberen Turmabschnitts einen Durchmesser von bis zu 4,5 m und die obere Deckfläche des Betonadapterelements einen Durchmesser von wenigstens 4,7 m, insbesondere etwa 6,0 m, auf.

Durch eine Begrenzung des Durchmessers der unteren Abschlussfläche des oberen Turmabschnitts auf die maximale Transporthöhe, die bei etwa 4,3 m bis 4,5 m liegt, können die Stahlsegmente horizontal liegend transportiert werden. Die Höhe des Betonadapterelements wird so gewählt, dass es aufrecht stehend transportiert werden kann, so dass der maximale Durchmesser des Betonadapterelements nur durch die Transportbreite begrenzt ist. Der Durchmesser der oberen Deckfläche des Betonadapterelements wird so gewählt, dass er abhängig von der Höhe und der damit zusammenhängenden Biegebelastung des oberen Turmabschnitts und der Stahladapterelemente die auftretenden Lasten aufnehmen kann. Bei einem Durchmesser der oberen Deckfläche des Betonadapters von 6,0 m steigt beispielsweise dessen Bauteilwiderstand im Vergleich zu einem Durchmesser von 4,3 m um etwa 95 %.

Die Stahladapterelemente weisen bei Wahl eines sinnvollen Verhältnisses von Höhe zu maximalem Durchmesser eine Zunahme des Durchmessers von oberer Deckfläche zur unteren Deckfläche von 0,4 m bis 0,6 m auf. Je nach Differenz des Durchmessers der oberen Deckfläche des Betonadapterelements und der unteren Abschlussfläche des oberen Turmabschnitts wird eine Anzahl Stahladapterelemente auf dem Betonadapterelement angeordnet, durch die diese Differenz ausgeglichen wird. Bei einer Zunahme des Durchmessers des Stahlsegments zum Betonadapterelement von 4,5 m auf 6 m können beispielsweise drei Stahladapterelemente mit einer Zunahme des Durchmessers von je 0,5 m eingesetzt werden.

Vorteilhaft ist im Falle eines unteren Turmabschnitts aus Betonsegmenten wenigstens ein Betonsegment und/oder das Betonadapterelement entlang einer oder mehrerer in radialer Richtung des Turms verlaufender Schnittebenen in mehrere Teilsegmente unterteilt. Durch die Erhöhung des Durchmessers des Betonadapterelements sowie der darunter anliegenden Betonsegmente steigt auch deren Gewicht. Um die Betonsegmente und das Betonadapterelement unter Verwendung der verfügbaren Krankapazitäten in der erforderlichen Höhe auf dem Turm anzuordnen, ist es sinnvoll, diese in mehrere Teilsegmente zu unterteilen, um das Gewicht der einzelnen Teilsegmente zu reduzieren. Dadurch wird die Verwendung von Kränen mit höheren Lastkapazitäten überflüssig, wodurch Kosten eingespart werden. Zudem kann auch eine Begrenzung des maximalen Durchmessers des Betonadapterelements bzw. der Betonsegmente durch die maximale Transportbreite vermieden werden.

Die Fixierung der Stahladapterelemente untereinander und an der unteren Abschlussfläche des oberen Turmabschnitts erfolgt bevorzugt mittels, insbesondere vorgespannter, Schraubverbindungen. Gemäß einer Ausführungsform der Erfindung erfolgt die Fixierung eines untersten Stahladapterelements an der oberen Deckfläche des Betonadapterelements mittels in das Betonadapterelement einbetonierter Ankerstangen. In einer alternativen Ausführungsform erfolgt die Fixierung eines untersten Stahladapterelements an der oberen Deckfläche des Betonadapterelements mittels eines zwischen dem untersten Stahladapterelement und dem Betonadapterelement angeordneten, insbesondere aus Stahl gefertigten, Lagerrings, wobei insbesondere die Fixierung des Lagerrings am untersten Stahladapterelement mittels Schraubverbindungen und die Fixierung des Lagerrings am Betonadapterelement mittels in das Betonadapterelement einbetonierter Ankerstangen erfolgt. In einer weiteren alternativen Ausführungsform erfolgt die Fixierung eines untersten Stahladapterelements an der oberen Deckfläche des Betonadapterelements mittels Spannlitzen, die durch den unteren Turmabschnitt und das Betonadapterelement verlaufen und im untersten Stahladapterelement mittels Spannmuttern fixiert sind.

Untere und obere Deckflächen der Stahladapterelemente und eine untere Abschlussfläche des oberen Turmabschnitts weisen vorteilhafterweise Flansche auf, an denen die Fixierung der Stahladapterelemente an dem oberen Turmabschnitt, dem Betonadapterelement und untereinander erfolgt, wobei die Flansche insbesondere als L-Flansch oder T-Flansch ausgebildet sind.

Die Fixierung der Stahladapterelemente untereinander und an dem oberen Turmabschnitt erfolgt in dieser Ausgestaltung mittels Schraubverbindungen, mit denen die Flansche der aneinander anliegenden Elemente aneinander fixiert werden. Die Verwendung von Ankerstangen zur Fixierung des untersten Stahladapterelements an dem Betonadapterelement bietet eine besonders sichere Fixierung. Wird zudem zwischen dem untersten Stahladapterelement und dem Betonadapterelement noch ein Lagerring angeordnet, so kann die Länge der Ankerstangen erhöht werden, ohne dass die konische Form des untersten Stahladapterelements die Fixierung an den Ankerstangen behindert. Alternativ können zur Fixierung des untersten Stahladapterelements Spannlitzen verwendet werden. Diese Spannlitzen werden verwendet, um die zulässigen Zugspannungen im Beton zu erhöhen. Indem diese ebenfalls zur Fixierung des untersten Stahladapterelements verwendet werden, können zusätzliche Kosten vermieden werden.

Ein L-Flansch umfasst einen vorzugsweise auf der Innenseite des zu fixierenden Elements verlaufenden Ring, der eine Anzahl Öffnungen zur Fixierung durch Schraubverbindungen, Ankerstangen oder Spannlitzen aufweist. Ein T-Flansch weist jeweils einen Ring auf der Innen- und Außenseite des jeweiligen Elements auf, wodurch ein höherer Bauteilwiderstand realisiert werden kann. Nachteilig erhöht sich durch die Verwendung eines T-Flansches der maximale Durchmesser des Elements. Zudem muss die Montage und Wartung eines T-Flansches auch von außerhalb des Turms erfolgen.

Die Aufgabe wird außerdem gelöst durch eine Windenergieanlage mit einem Turm gemäß einem der zuvor beschriebenen Ausführungsformen. Die Windenergieanlage verkörpert die gleichen Vorteile, Merkmale und Eigenschaften wie der zuvor beschriebene erfindungsgemäße Turm.

Weiterhin wird die Aufgabe gelöst durch ein Verfahren zum Errichten eines Turms, insbesondere gemäß einer der zuvor beschriebenen Ausführungsformen, insbesondere für eine Windenergieanlage, mit den folgenden Verfahrensschritten:
- Errichten eines unteren Turmabschnitts aus Betonsegmenten oder Ortbeton,
- Anordnen eines Betonadapterelements auf dem unteren Turmabschnitt aus Betonsegmenten oder Ortbeton, insbesondere Integrieren eines Betonadapterelements im Ortbeton an einer Oberseite des unteren Turmabschnitts,
- Anordnen wenigstens eines konisch geformten Stahladapterelements, das sich von einer unteren Deckfläche zu einer oberen Deckfläche des Stahladapterelements verjüngt, auf dem Betonadapterelement oder einem zwischen Stahladapterelement und Betonadapterelement angeordneten Lagerring,
- Errichten eines oberen Turmabschnitts aus wenigstens einem Stahlsegment auf dem obersten Stahladapterelement.

Das Verfahren verkörpert ebenfalls die gleichen Vorteile, Merkmale und Eigenschaften wie der zuvor beschriebene erfindungsgemäße Turm.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
Fig. 1a eine schematische Darstellung eines Hybridturms mit einem Betonadapterelement und einem konischen Stahladapterelement,
Fig. 1b eine schematische Darstellung eines Hybridturms mit einem Betonadapterelement und zwei Stahladapterelementen,
Fig. 2 eine schematische Explosionsdarstellung eines Adapterabschnitts,
Fig. 3a eine schematische Darstellung einer Fixierung der Stahladapterelemente mittels eines L-Flansches,
Fig. 3b eine schematische Darstellung einer Fixierung der Stahladapterelemente mittels eines T-Flansches,
Fig. 4a eine schematische Darstellung einer Fixierung des untersten Stahladapterelements mittels Ankerstangen,
Fig. 4b eine schematische Darstellung einer Fixierung des untersten Stahladapterelements mittels Ankerstangen und einem Lagerring und
Fig. 4c eine schematische Darstellung einer Fixierung des untersten Stahladapterelements mittels Spannlitzen.

In den Zeichnungen sind jeweils gleiche oder gleichartige Elemente und/oder Teile mit denselben Bezugsziffern versehen, so dass von einer erneuten Vorstellung jeweils abgesehen wird.

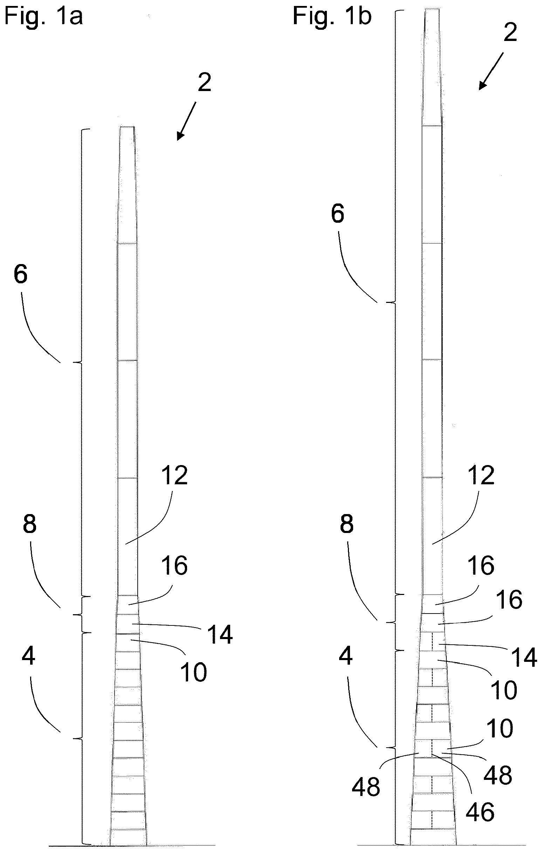

Fig. 1a zeigt schematisch einen Turm 2, der als Hybridturm ausgestaltet ist. Der Turm 2 umfasst einen unteren Turmabschnitt 4 und einen oberen Turmabschnitt 6, zwischen denen ein Adapterabschnitt 8 angeordnet ist. Der untere Turmabschnitt 4 umfasst mehrere Betonsegmente 10, von denen aus Gründen der Übersichtlichkeit in Fig. 1a nur das oberste Betonsegment 10 mit einem Bezugszeichen versehen ist. Über dem unteren Turmabschnitt 4 ist ein Betonadapterelement 14 und ein Stahladapterelement 16 angeordnet. Auf dem Stahladapterelement 16 sind wiederum vier im Wesentlichen zylindrische Stahlsegmente 12 angeordnet, von denen aus Gründen der Übersichtlichkeit nur das unterste mit einem Bezugszeichen versehen ist und die zusammen den oberen Turmabschnitt 6 bilden.

Das Stahladapterelement 16 weist eine konische Form auf. Durch die Verwendung eines konischen Stahladapterelements 16 kann der Durchmesser des Betonadapterelements 14 vergrößert werden. Dadurch erhöht sich die Auflagefläche und damit der Bauteilwiderstand des Betonadapterelements 14, wodurch es möglich wird, den oberen Turmabschnitt 6 höher als den unteren Turmabschnitt 4 auszubilden und somit Kosten einzusparen.

In Fig. 1b ist ein Turm 2 gezeigt, der sich von dem Hybridturm aus Fig. 1a dahingehend unterscheidet, dass der Adapterabschnitt 8 zwei Stahladapterelemente 16 umfasst, so dass die Auflagefläche und damit der Bauteilwiderstand des Betonadapterelements 14 weiter erhöht werden kann. Dadurch ist es möglich, ein weiteres Stahlsegment 12 im oberen Turmabschnitt 6 anzuordnen und somit die Gesamthöhe des Turms zu erhöhen.

Der größere Durchmesser des Betonadapterelements 14 und der darunterliegenden Betonsegmente 10 führt ebenfalls zu einer Erhöhung des Gewichts dieser Elemente. Um eine Erhöhung der erforderlichen Krankapazitäten zu vermeiden, sind sowohl das Betonadapterelement 14 als auch die Betonsegmente 10 entlang der Schnittebene 46 in jeweils zwei Teilsegmente 48 unterteilt. Die Schnittebene jedes zweiten Betonsegments 10 verläuft senkrecht zur Schnittebene 46, also parallel zur Bildebene. Die Teilsegmente 48 sind im Vergleich zu einem nicht unterteilten Betonadapterelement 14 bzw. Betonsegment 10 deutlich leichter, wodurch eine Erhöhung der Krankapazitäten vermieden wird. Um das Gewicht der Teilsegmente 48 weiter zu reduzieren, können auch weitere in radialer Richtung des Turms verlaufende Schnittebenen vorgesehen sein, die jedoch in Fig. 1b nicht gezeigt sind.

Die Darstellungen der Türme 2 in Fig. 1a und 1b sind nur beispielhaft. Die Erfindung umfasst ebenfalls Türme 2 mit nur einem Stahladapterelement 16, bei denen das Betonadapterelement 14 und/oder die Betonsegmente 10 in mehrere Teilsegmente 48 unterteilt sind. Auch Türme 2 mit zwei oder mehr Stahladapterelementen 16, bei denen das Betonadapterelement 14 und/oder die Betonsegmente 10 einteilig sind, sind von der Erfindung umfasst, ebenso wie Türme 2, bei denen der untere Turmabschnitt 4 aus Ortbeton hergestellt ist und keine Segmentierung wie in Fig. 1a und 1b aufweist.

Im Falle der Herstellung des unteren Turmabschnitts 4 aus Ortbeton wird dieser vor Ort vergossen. Das Betonadapterelement 14 kann entweder, ähnlich wie bei Betonsegmenten 10, auf einer oberen Fläche aufgesetzt werden oder beim Gießen des Ortbetons im obersten Bereich eingegossen bzw. integriert werden, wobei das Betonadapterelement 14 im letzteren Fall Strukturen aufweist, die im Ortbeton eingebettet werden und für eine Verankerung im Ortbeton sorgen, und andere Strukturen, die aus dem Ortbeton herausragen.

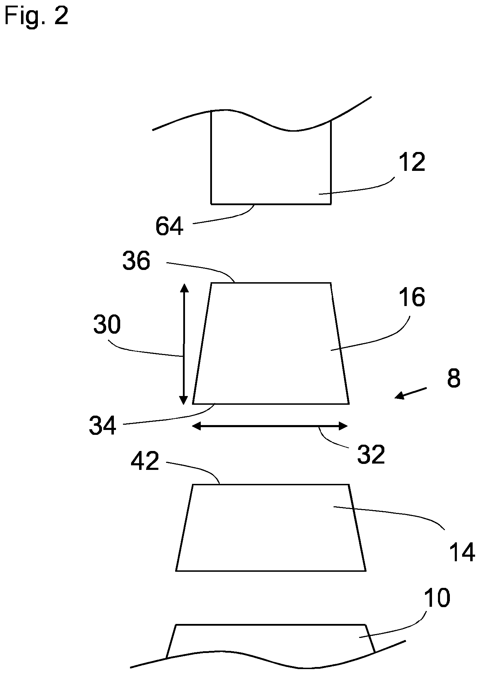

Fig. 2 zeigt schematisch eine Explosionsdarstellung eines Adapterabschnitts 8 mit einem einzelnen Stahladapterelement 16. Die untere Abschnittsfläche 64 des untersten Stahlsegments 12 liegt im zusammengebauten Zustand an der oberen Deckfläche 36 des Stahladapterelements 16 an. Die untere Deckfläche 34 des Stahladapterelements 16 liegt an der oberen Deckfläche 42 des Betonadapterelements 14 an. Da die Stahlsegmente 12 horizontal transportiert werden, ist der maximale Durchmesser der unteren Abschlussfläche 64 durch die maximale Transporthöhe begrenzt, die bei etwa 4,3 bis 4,5 m liegt. Die maximale Transporthöhe begrenzt auch die Höhe 30 der Stahladapterelemente 16, da diese aufrecht stehend transportiert werden. Der maximale Durchmesser 32 des Stahladapterelements 16 und der Durchmesser der oberen Deckfläche 42 des Betonadapterelements sind hingegen nicht durch die Transporthöhe begrenzt und können größer gewählt werden, so dass das Betonadapterelement 14 die Lasten der darüber liegenden Stahlsegmente 12 und Stahladapterelemente 16 tragen kann.

Durch die konische Form des Stahladapterelements 16 wird die Differenz des Durchmessers zwischen unterer Abschlussfläche 64 und oberer Deckfläche 42 ausgeglichen. Das Verhältnis zwischen der Höhe 30 des Stahladapterelements 16 und seinem maximalen Durchmesser 32 liegt bevorzugt zwischen 1 und 0,6. Durch dieses Verhältnis wird der Durchmesser 32 der unteren Deckfläche 34 im Vergleich zum Durchmesser der oberen Deckfläche 36 erhöht, ohne dass die Stabilität des Stahladapterelements 16 gefährdet wird oder unnötig viele Stahladapterelemente 16 verwendet werden müssen.

Auch das Betonadapterelement 14 sowie die Betonsegmente 10 können konisch geformt sein, wobei für den Bauteilwiderstand des Betonadapterelements 14 nur der Durchmesser der oberen Deckfläche 42 entscheidend ist. Betonsegmente 10, Stahlsegmente 12, Betonadapterelement 14 und Stahladapterelemente 16 haben gemäß einer Ausführungsform der Erfindung einen ringförmigen Querschnitt. Die Erfindung umfasst aber ebenfalls Ausführungsformen, bei denen eines oder mehrere dieser Elemente eine andere Querschnittsform, beispielsweise die Form eines Vielecks aufweisen. In diesem Fall bezeichnet der Durchmesser dieser Elemente den Durchmesser eines das Vieleck umfassenden Kreises.

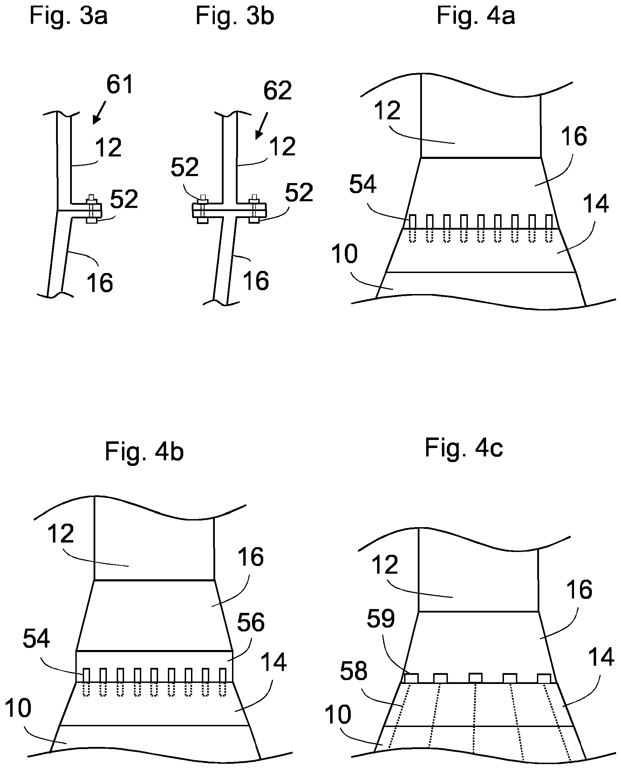

In Fig. 3a ist schematisch ein Querschnitt durch die Außenwand eines Stahlsegments 12 und eines Stahladapterelements 16 gezeigt. Diese sind mittels einer Schraubverbindung 52 an einem L-Flansch 61 miteinander fixiert. Der L-Flansch 61 verläuft dabei ringförmig bevorzugt entlang der Innenseite eines Stahlsegments 12 oder eines Stahladapterelements 16. Dadurch kann die Montage und Wartung der Schraubverbindung 52 von innerhalb des Turms erfolgen.

In Fig. 3b ist schematisch ein Querschnitt durch die Außenwand eines Stahlsegments 12 und eines Stahladapterelements 16 gezeigt, die jeweils einen T-Flansch 62 aufweisen. Bei einem solchen T-Flansch 62 verläuft je ein Flanschring auf der Innenseite und der Außenseite eines Stahlsegments 12 oder eines Stahladapterelements 16. Die Fixierung erfolgt auch in diesem Fall mittels Schraubverbindungen 52. Vorteilhaft kann mit einem T-Flansch 62 ein deutlich höherer Bauteilwiderstand realisiert werden. Nachteilig erschwert der äußere Flanschring jedoch Montage und Servicearbeiten. Zudem wird durch den äußeren Flanschring der Durchmesser eines Stahlsegments 12 oder Stahladapterelements 16 erhöht. Bei den Stahlsegmenten 12 hat dies zur Folge, dass der Durchmesser der Stahlsegmente 12 reduziert werden muss, um die maximale Transporthöhe einzuhalten.

In Fig. 4a bis Fig. 4c sind verschiedene Methoden der Fixierung des untersten Stahladapterelements 16 auf dem Betonadapterelement 14 schematisch dargestellt. Fig. 4a zeigt eine Ausführungsform, bei der eine Anzahl Ankerstangen 54 ringförmig in das Betonadapterelement 14 einbetoniert ist. Die Ankerstangen 54 greifen in die Öffnungen eines nicht dargestellten L-Flansches des Stahladapterelements 16 ein, welches anschließend mit Hilfe von Muttern fixiert wird. Je größer die obere Deckfläche des Betonadapterelements 14 ist, desto mehr Ankerstangen 54 können darin einbetoniert werden, wodurch das Betonadapterelement 14 höhere Lasten tragen kann. In einer alternativen Ausführungsform der Erfindung ist zur Fixierung des Stahladapterelements 16 auf dem Betonadapterelement 14 ein T-Flansch 62 vorgesehen. In diesem Fall weist die obere Deckfläche 42 des Betonadapterelements 14 zwei konzentrische Ringe von Ankerstangen 54 auf. Zudem ist der Durchmesser der oberen Deckfläche 42 des Betonadapterelements 14 größer als der Durchmesser 32 der unteren Deckfläche 34 des Stahladapterelements 16.

Fig. 4b zeigt eine weitere Ausführungsform, bei der zusätzlich zur Ausführungsform aus Fig. 4a ein Lagerring 56 zwischen Stahladapterelement 16 und Betonadapterelement 14 angeordnet ist. Der Lagerring 56 verfügt über einen unteren Flansch, durch den die Ankerstangen 54 durchgreifen. Ein oberer Flansch des Lagerrings 56 ist mittels Schraubverbindungen an dem darüber liegenden Stahladapterelement 16 fixiert. Durch den Lagerring 56 kann die Länge der Ankerstangen 54 erhöht werden, ohne dass die konische Form des Stahladapterelements 16 die Fixierung an den Ankerstangen 54 behindert. Fig. 4c zeigt eine Fixierung des Stahladapterelements 16 auf dem Betonadapterelement 14 mittels Spannlitzen 58, die durch das Betonadapterelement 14 und die darunterliegenden Betonsegmente 10 verlaufen. Das Stahladapterelement 16 verfügt in diesem Fall über einen innenliegenden L-Flansch 61, an dem die Spannlitzen 58 mittels Spannmuttern 59 befestigt werden.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezugszeichenliste

- 2: Turm
- 4: unterer Turmabschnitt
- 6: oberer Turmabschnitt
- 8: Adapterabschnitt
- 10: Betonsegment
- 12: Stahlsegment
- 14: Betonadapterelement
- 16: Stahladapterelement
- 30: Höhe
- 32: maximaler Durchmesser
- 34: untere Deckfläche
- 36: obere Deckfläche
- 42: obere Deckfläche
- 46: Schnittebene
- 48: Teilsegmente
- 52: Schraubverbindungen
- 54: Ankerstangen
- 56: Lagerring
- 58: Spannlitze
- 59: Spannmutter
- 61: L-Flansch
- 62: T-Flansch
- 64: untere Abschlussfläche

## Patentansprüche

1. Turm (2), insbesondere für eine Windenergieanlage, umfassend einen unteren Turmabschnitt (4) und einen oberen Turmabschnitt (6), wobei der untere Turmabschnitt (4) aus Betonsegmenten (10) oder Ortbeton und der obere Turmabschnitt (6) aus wenigstens einem Stahlsegment (12) ausgebildet ist, wobei ein Adapterabschnitt (8) zwischen dem unteren Turmabschnitt (4) und dem oberen Turmabschnitt (6) angeordnet ist, wobei der Adapterabschnitt (8) ein Betonadapterelement (14) und wenigstens ein über dem Betonadapterelement (14) angeordnetes Stahladapterelement (16) umfasst, wobei das Stahladapterelement (16) konisch geformt ist und sich in Richtung des oberen Turmabschnitts (6) verjüngt, wobei wenigstens ein Betonsegment (10) und/oder das Betonadapterelement (14) entlang einer oder mehrerer in radialer Richtung des Turms (2) verlaufender Schnittebenen (46) in mehrere Teilsegmente (48) unterteilt ist und wobei das Betonadapterelement (14) einbetonierte Ankerstangen (54) aufweist.

2. Turm (2) nach Anspruch 1, **dadurch gekennzeichnet, dass** eine Höhe des oberen Turmabschnitts (6) größer als, insbesondere wenigstens doppelt so groß wie, eine Höhe des unteren Turmabschnitts (4) ist, wobei insbesondere eine Gesamthöhe des Turms wenigstens 150 m beträgt.

3. Turm (2) nach Anspruch 1 oder 2, **dadurch gekennzeichnet, dass** die Stahladapterelemente (16) jeweils eine Höhe (30) von wenigstens 2,5 m, insbesondere von 3,5 m bis 4,5 m aufweisen.

4. Turm (2) nach einem der Ansprüche 1 bis 3, **dadurch gekennzeichnet, dass** die Stahladapterelemente (16) jeweils ein Verhältnis von Höhe (30) zu maximalem Durchmesser (32) von 1 oder weniger aufweisen, wobei insbesondere das Verhältnis zwischen 1 und 0,6 liegt.

5. Turm (2) nach einem der vorhergehenden Ansprüche, **dadurch gekennzeichnet, dass** eine untere Abschlussfläche (64) des oberen Turmabschnitts (6) den gleichen Durchmesser aufweist wie eine obere Deckfläche (36) eines darunter anliegenden Stahladapterelements (16) und eine untere Deckfläche (34) jedes Stahladapterelements (16) den gleichen Durchmesser (32) aufweist wie eine obere Deckfläche (36) eines darunter anliegenden Stahladapterelements (16) oder eine obere Deckfläche (42) des darunter anliegenden Betonadapterelements (14).

6. Turm (2) nach dem vorhergehenden Anspruch, **dadurch gekennzeichnet, dass** bei wenigstens einem Stahladapterelement (16) ein Durchmesser (32) der unteren Deckfläche (34) um wenigstens 0,4 m, insbesondere bis 0,6 m, größer als ein Durchmesser der oberen Deckfläche (36) ist.

7. Turm (2) nach dem vorhergehenden Anspruch, **dadurch gekennzeichnet, dass** die untere Abschlussfläche (64) des oberen Turmabschnitts (6) einen Durchmesser von bis zu 4,5 m und die obere Deckfläche (42) des Betonadapterelements (14) einen Durchmesser von wenigstens 4,7 m, insbesondere etwa 6,0 m, aufweist.

8. Turm (2) nach einem der vorhergehenden Ansprüche, **dadurch gekennzeichnet, dass** die Fixierung der Stahladapterelemente (16) untereinander und an der unteren Abschlussfläche (64) des oberen Turmabschnitts (6) mittels, insbesondere vorgespannter, Schraubverbindungen (52) erfolgt.

9. Turm (2) nach einem der Ansprüche 1 bis 8, **dadurch gekennzeichnet, dass** die Fixierung eines untersten Stahladapterelements (16) an der oberen Deckfläche (42) des Betonadapterelements (14) mittels der in das Betonadapterelement (14) einbetonierter Ankerstangen (54) erfolgt.

10. Turm (2) nach einem der Ansprüche 1 bis 8, **dadurch gekennzeichnet, dass** die Fixierung eines untersten Stahladapterelements (16) an der oberen Deckfläche (42) des Betonadapterelements (14) mittels eines zwischen dem untersten Stahladapterelement (16) und dem Betonadapterelement (14) angeordneten, insbesondere aus Stahl gefertigten, Lagerrings (56) erfolgt, wobei insbesondere die Fixierung des Lagerrings (56) am untersten Stahladapterelement (16) mittels Schraubverbindungen (52) und die Fixierung des Lagerrings (56) am Betonadapterelement (14) mittels der in das Betonadapterelement (14) einbetonierter Ankerstangen (54) erfolgt.

11. Turm (2) nach einem der vorhergehenden Ansprüche, **dadurch gekennzeichnet, dass** untere und obere Deckflächen (34, 36) der Stahladapterelemente (16) und eine untere Abschlussfläche (64) des oberen Turmabschnitts (6) Flansche aufweisen, an denen die Fixierung der Stahladapterelemente (16) an dem oberen Turmabschnitt (6), dem Betonadapterelement (14) und untereinander erfolgt, wobei die Flansche insbesondere als L-Flansch (61) oder T-Flansch (62) ausgebildet sind.

12. Windenergieanlage mit einem Turm (2) nach einem der vorhergehenden Ansprüche.

13. Verfahren zum Errichten eines Turms (2) nach einem der Ansprüche 1 bis 11, insbesondere für eine Windenergieanlage, mit den folgenden Verfahrensschritten:
- Errichten eines unteren Turmabschnitts (4) aus Betonsegmenten (10) oder Ortbeton,
- Anordnen eines Betonadapterelements (14) auf dem unteren Turmabschnitt (4) aus Betonsegmenten (10) oder Ortbeton, insbesondere Integrieren eines Betonadapterelements (14) in den Ortbeton an einer Oberseite des unteren Turmabschnitts,
- Anordnen wenigstens eines konisch geformten Stahladapterelements (16), das sich von einer unteren Deckfläche (34) zu einer oberen Deckfläche (36) des Stahladapterelements (16) verjüngt, auf dem Betonadapterelement (14) oder auf einem zwischen Stahladapterelement (16) und Betonadapterelement (14) angeordneten Lagerring (56),
- Errichten eines oberen Turmabschnitts (6) aus wenigstens einem Stahlsegment (12) auf dem obersten Stahladapterelement (16).

## Claims

1. A tower (2), in particular for a wind energy installation, comprising a lower tower portion (4) and an upper tower portion (6), wherein the lower tower portion (4) is formed from concrete segments (10) or from cast in situ concrete, and the upper tower portion (6) is formed from at least one steel segment (12), wherein an adapter portion (8) is arranged between the lower tower portion (4) and the upper tower portion (6), wherein the adapter portion (8) comprises a concrete adapter element (14) and at least one steel adapter element (16) arranged above the concrete adapter element (14), wherein the steel adapter element (16) is formed in a conical shape and tapers so as to become narrower in the direction of the upper tower portion (6), wherein at least one concrete segment (10) and/or the concrete adapter element (14) is divided into a plurality of partial segments (48) along one or more cutting planes (46) which extend in the radial direction of the tower (2), and wherein the concrete adapter element (14) has anchor rods (54) which are embedded in the concrete.

2. The tower (2) according to claim 1, **characterised in that** a height of the upper tower portion (6) is greater than a height of the lower tower portion (4), in particular at least twice as great as a height of the lower tower portion (4), in particular wherein a total height of the tower is at least 150 m.

3. The tower (2) according to claim 1 or 2, **characterised in that** the steel adapter elements (16) each have a height (30) of at least 2.5 m, in particular from 3.5 m to 4.5 m.

4. The tower (2) according to any one of claims 1 to 3, **characterised in that** the steel adapter elements (16) each have a ratio of height (30) to maximum diameter (32) of 1 or less, in particular wherein the ratio is between 1 and 0.6.

5. The tower (2) according to any one of the preceding claims, **characterised in that** a lower end surface (64) of the upper tower portion (6) has the same diameter as an upper cover surface (36) of an adjoining steel adapter element (16) located underneath, and a lower cover surface (34) of each steel adapter element (16) has the same diameter (32) as an upper cover surface (36) of an adjoining steel adapter element (16) located underneath or an upper cover surface (42) of the adjoining concrete adapter element (14) located underneath.

6. The tower (2) according to the preceding claim, **characterised in that**, in at least one steel adapter element (16), a diameter (32) of the lower cover surface (34) is greater by at least 0.4 m, in particular by up to 0.6 m, than a diameter of the upper cover surface (36).

7. The tower (2) according to the preceding claim, **characterised in that** the lower end surface (64) of the upper tower portion (6) has a diameter of up to 4.5 m and the upper cover surface (42) of the concrete adapter element (14) has a diameter of at least 4.7 m, in particular approximately 6.0 m.

8. The tower (2) according to any one of the preceding claims, **characterised in that** the fixing of the steel adapter elements (16) to one another and to the lower end surface (64) of the upper tower portion (6) is effected by means of screw connections (52), in particular by means of pretensioned screw connections (52).

9. The tower (2) according to any one of claims 1 to 8, **characterised in that** the fixing of a lowermost steel adapter element (16) to the upper cover surface (42) of the concrete adapter element (14) is effected by means of the anchor rods (54) which are concreted into the concrete adapter element (14).

10. The tower (2) according to any one of claims 1 to 8, **characterised in that** the fixing of a lowermost steel adapter element (16) to the upper cover surface (42) of the concrete adapter element (14) is effected by means of a bearing ring (56), in particular by means of a bearing ring (56) made of steel, which is arranged between the lowermost steel adapter element (16) and the concrete adapter element (14), in particular wherein the fixing of the bearing ring (56) to the lowermost steel adapter element (16) is effected by means of screw connections (52), and the fixing of the bearing ring (56) to the concrete adapter element (14) is effected by means of the anchor rods (54) which are cast into the concrete adapter element (14).

11. The tower (2) according to any one of the preceding claims, **characterised in that** upper and lower cover surfaces (36, 34) of the steel adapter elements (16) and a lower end surface (64) of the upper tower portion (6) have flanges at which is effected the fixing of the steel adapter elements (16) to the upper tower portion (6), to the concrete adapter element (14) and to one another, wherein the flanges are constructed in particular as an L-flange (61) or as a T-flange (62).

12. A wind energy installation with a tower (2) according to any one of the preceding claims.

13. A method of erecting a tower (2) according to any one of claims 1 to 11, in particular for a wind energy installation, wherein the method comprises the following method steps:
- erecting a lower tower portion (4) from concrete segments (10) or from cast in situ concrete,
- arranging a concrete adapter element (14) on the lower tower portion (4) made of concrete segments (10) or from cast in situ concrete, in particular integrating a concrete adapter element (14) into the cast in situ concrete on an upper side of the lower tower portion,
- arranging at least one steel adapter element (16) formed in a conical shape, which steel adapter element (16) tapers from a lower cover surface (34) so as to become narrower towards an upper cover surface (36) of the steel adapter element (16), on the concrete adapter element (14) or on a bearing ring (56) which is arranged between the steel adapter element (16) and the concrete adapter element (14),
- erecting an upper tower portion (6) comprising at least one steel segment (12) on the uppermost steel adapter element (16).

## Revendications

1. Mât (2), en particulier pour une éolienne, comprenant une section inférieure de mât (4) et une section supérieure de mât (6), dans lequel la section inférieure de mât (4) est réalisée à partir de segments en béton (10) ou de béton coulé sur place et la section supérieure de mât (6) est réalisée à partir d'au moins un segment en acier (12), dans lequel une section d'adaptation (8) est disposée entre la section inférieure de mât (4) et la section supérieure de mât (6), dans lequel la section d'adaptation (8) comprend un élément adaptateur en béton (14) et au moins un élément adaptateur en acier (16) disposé au-dessus de l'élément adaptateur en béton (14), dans lequel l'élément adaptateur en acier (16) est formé de manière conique et se rétrécit en direction de la section supérieure de mât (6), dans lequel au moins un segment en béton (10) et/ou l'élément adaptateur en béton (14) sont divisés en plusieurs segments partiels (48) le long d'un ou de plusieurs plans de coupe (46) s'étendant dans la direction radiale du mât (2) et dans lequel l'élément adaptateur en béton (14) présente des tiges d'ancrage (54) coulées dans le béton.

2. Mât (2) selon la revendication 1, **caractérisé en ce qu'**une hauteur de la section supérieure de mât (6) est plus grande, en particulier est au moins deux fois plus grande, qu'une hauteur de la section inférieure de mât (4), dans lequel en particulier une hauteur totale du mât est d'au moins 150 m.

3. Mât (2) selon la revendication 1 ou 2, **caractérisé en ce que** les éléments adaptateurs en acier (16) présentent respectivement une hauteur (30) d'au moins 2,5 m, en particulier de 3,5 m à 4,5 m.

4. Mât (2) selon l'une quelconque des revendications 1 à 3, **caractérisé en ce que** les éléments adaptateurs en acier (16) présentent respectivement un rapport entre la hauteur (30) et un diamètre maximal (32) inférieur ou égal à 1, dans lequel en particulier le rapport se situe entre 1 et 0, 6.

5. Mât (2) selon l'une quelconque des revendications précédentes, **caractérisé en ce qu'**une surface inférieure de terminaison (64) de la section supérieure de mât (6) présente le même diamètre qu'une surface supérieure de recouvrement (36) d'un élément adaptateur en acier (16) reposant en dessous et une surface inférieure de recouvrement (34) de chaque élément adaptateur en acier (16) présente le même diamètre (32) qu'une surface supérieure de recouvrement (36) d'un élément adaptateur en acier (16) situé en dessous ou qu'une surface supérieure de recouvrement (42) de l'élément adaptateur en béton (14) situé en dessous.

6. Mât (2) selon la revendication précédente, **caractérisé en ce que** pour au moins un élément adaptateur en acier (16), un diamètre (32) de la surface inférieure de recouvrement (34) est plus grand d'au moins 0,4 m, en particulier jusqu'à 0,6 m, qu'un diamètre de la surface supérieure de recouvrement (36).

7. Mât (2) selon la revendication précédente, **caractérisé en ce que** la surface inférieure de terminaison (64) de la section supérieure de mât (6) présente un diamètre allant jusqu'à 4,5 m et la surface supérieure de recouvrement (42) de l'élément adaptateur en béton (14) présente un diamètre d'au moins 4,7 m, en particulier d'environ 6,0 m.

8. Mât (2) selon l'une quelconque des revendications précédentes, **caractérisé en ce que** la fixation des éléments adaptateurs en acier (16) entre eux et sur la surface inférieure de terminaison (64) de la section supérieure de mât (6) est effectuée au moyen de liaisons vissées (52) en particulier précontraintes.

9. Mât (2) selon l'une quelconque des revendications 1 à 8, **caractérisé en ce que** la fixation d'un élément adaptateur en acier le plus bas (16) sur la surface supérieure de recouvrement (42) de l'élément adaptateur en béton (14) est effectuée au moyen des tiges d'ancrage (54) coulées dans le béton dans l'élément adaptateur en béton (14).

10. Mât (2) selon l'une quelconque des revendications 1 à 8, **caractérisé en ce que** la fixation d'un élément adaptateur en acier le plus bas (16) sur la surface supérieure de recouvrement (42) de l'élément adaptateur en béton (14) est effectuée au moyen d'une bague de palier (56) disposée entre l'élément adaptateur en acier le plus bas (16) et l'élément adaptateur en béton (14), produite en particulier à partir d'acier, dans lequel en particulier la fixation de la bague de palier (56) sur l'élément adaptateur en acier le plus bas (16) est effectuée au moyen de liaisons vissées (52) et la fixation de la bague de palier (56) sur l'élément adaptateur en béton (14) est effectuée au moyen des tiges d'ancrage (54) coulées dans le béton dans l'élément adaptateur en béton (14).

11. Mât (2) selon l'une quelconque des revendications précédentes, **caractérisé en ce que** des surfaces inférieures et supérieures de recouvrement (34, 36) des éléments adaptateurs en acier (16) et une surface inférieure de terminaison (64) de la section supérieure de mât (6) présentent des brides, sur lesquelles la fixation des éléments adaptateurs en béton (16) sur la section supérieure de mât (6), l'élément adaptateur en béton (14) et entre eux est effectuée, dans lequel les brides sont réalisées en particulier en tant que bride en L (61) ou en tant que bride en T (62).

12. Eolienne avec un mât (2) selon l'une quelconque des revendications précédentes.

13. Procédé destiné à construire un mât (2) selon l'une quelconque des revendications 1 à 11, en particulier pour une éolienne, avec les étapes de procédé suivantes :
- la construction d'une section inférieure de mât (4) à partir de segments en béton (10) ou de béton coulé sur place,
- la disposition d'un élément adaptateur en béton (14) sur la section inférieure de mât (4) composée de segments en béton (10) ou de béton coulé sur site, en particulier l'intégration d'un élément adaptateur en béton (14) dans le béton coulé sur place sur un côté supérieur de la section inférieure de mât,
- la disposition d'au moins un élément adaptateur en acier (16) formé de manière conique, qui se rétrécit depuis une surface inférieure de recouvrement (34) vers une surface supérieure de recouvrement (36) de l'élément adaptateur en acier (16), sur l'élément adaptateur en béton (14) ou sur une bague de palier (56) disposée entre l'élément adaptateur en acier (16) et l'élément adaptateur en béton (14),
- la construction d'une section supérieure de mât (6) à partir d'au moins un segment en acier (12) sur l'élément adaptateur en acier le plus haut (16).
